# EUROPÄISCHE PATENTANMELDUNG

(11) **EP 2 020 722 A2**
(43) Veröffentlichungstag der Anmeldung: **04.02.2009**
(21) Anmeldenummer: 08104835.7
(22) Anmeldetag: 23.07.2008
(51) Int. Cl.: H02H 7/08

(54) **Einrichtung und Verfahren zum Betreiben eines elektrischen Verbrauchers**

(30) Priorität: 03.08.2007 DE 102007036667
(71) Anmelder: BSH Bosch und Siemens Hausgeräte GmbH, 81739 München (DE)
(72) Erfinder: Feldmeier, Rudolf, 94447, Plattling (DE)

(57) **Zusammenfassung**

Die vorliegende Erfindung betrifft eine Einrichtung zum Betreiben eines elektrischen Verbrauchers (1) mithilfe eines elektrischen Steuerelements (2), dem über eine Steuerelektrode Signale zuführbar sind, die den Stromfluss zwischen einer mit einem Netzanschluss gekoppelten ersten Anschlusselektrode (21) und einer mit dem elektrischen Verbraucher gekoppelten zweiten Anschlusselektrode (22) beeinflussen, wobei der elektrische Verbraucher (1) mit einem zweiten Netzanschluss (32) gekoppelt ist. Die Einrichtung weist erfindungsgemäß eine Schaltanordnung (4) auf, die an einem nicht mit einem Netzanschluss verbundenen Abgriff-Pol (33) zwischen der zweiten Anschlusselektrode (22) und dem elektrischen Verbraucher (1) ein elektrisches Potential abgreift und das Potential so wandelt, dass an einer Ausgangsspannung der Schaltanordnung (4) erkennbar ist, ob das elektrische Steuerelement (2) die beiden Anschlusselektroden (21 und 22) kurzschließt oder nicht. Dadurch kann schon nach relativ kurzer Zeit nach dem Anschließen des elektrischen Verbrauchers, beispielsweise eines Trommelmotors einer Waschmaschine, ein möglicher Kurzschluss des elektrischen Steuerelements, beispielsweise ein Triac-Kurzschluss, anhand der Ausgangsspannung der Schaltanordnung erkannt werden. Erfindungsgemäß lässt sich ein Kurzschluss des elektrischen Steuerelements schon nach mehreren 10 ms erkennen.

## Beschreibung

Die vorliegende Erfindung betrifft eine Einrichtung und ein Verfahren zum Betreiben eines elektrischen Verbrauchers (wie beispielsweise eines Trommelmotors einer Waschmaschine) mithilfe eines elektrischen Steuerelements (zum Beispiel eines Triacs), dem über eine Steuerelektrode Signale zuführbar sind, die den Stromfluss zwischen einer mit einem Netzanschluss gekoppelten ersten Anschlusselektrode und einer mit dem elektrischen Verbraucher gekoppelten zweiten Anschlusselektrode beeinflussen, wobei der elektrische Verbraucher mit einem zweiten Netzanschluss gekoppelt ist.

Vorliegend richtet sich das Interesse auf eine in der Einrichtung integrierte elektrische Schaltanordnung, mit welcher das elektrische Steuerelement auf Fehlerfunktionen hin überprüft werden kann. Mithilfe dieser Schaltanordnung kann anhand einer Ausgangsspannung erkannt werden, ob das elektrische Steuerelement die erste Anschlusselektrode mit der zweiten Anschlusselektrode kurzschließt oder nicht.

Derzeit erfolgt eine Erkennung von Triac-Kurzschluss in einer Waschmaschine über eine Auswertung der Drehzahl des Trommelmotors. Dazu wird ein Tachometer verwendet, der an dem Trommelmotor angeschlossen ist, und der drehzahlabhängige Spannungssignale an eine Steuerelektronik liefert, mit deren Hilfe eine Ist-Drehzahl des Trommelmotors erfasst werden kann. Bei zu großen Drehzahlabweichungen der Ist-Drehzahl von einer Soll-Drehzahl wird von einem Triac-Kurzschluss ausgegangen. Eine Erkennung eines Triac-Kurzschlusses dauert auf diese Art ca. 320 ms. Da in den Spannungssignalen von dem Tachometer für die Steuerelektronik möglicherweise Störungen eine Falschauswertung der Spannungssignale verursachen könnten, werden nach kurzer Wartezeit drei weitere Versuche zur Motoransteuerung unternommen. Erst, wenn diese Ansteuerversuche einen möglichen Triac-Kurzschluss bestätigen, wird der Triac nicht mehr angesteuert und die Steuerelektronik geht in einen sicheren Zustand.

Eine Überwachungsschaltung für die Steuerung eines Elektromotors (für eine Waschmaschine) ist beispielsweise aus der DE 197 33 533 C2 bekannt, bei der eine Steuerelektronik die Motordrehzahl über ein mit dem Elektromotor am Versorgungsnetz in Reihe geschaltetes, elektronisches Schaltelement (Triac) regelt und die Ist-Drehzahl über ein Drehzahlüberwachungsglied (Tachometer) auswertet. Es kann mithilfe einer Schaltung anhand von deren Ausgangsspannung festgestellt werden, ob das elektronische Schaltelement einen Kurzschluss aufweist oder nicht. Eine Erkennung des Kurzschlusses erfolgt dabei bei einem offenen Schalter, der dem Ein- und Ausschalten des Elektromotors dient. Ein Kurzschluss des elektronischen Schaltelements kann also erkannt werden, wenn der Elektromotor noch nicht an das Versorgungsnetz angeschlossen ist. Dies wird durch einen Widerstand ermöglicht, der die obige Schaltung mit einem Netzanschluss verbindet, und somit ein Auftreten einer elektrischen Spannung am Eingang der Schaltung zur Folge hat. Da sich die Ausgangsspannung der Schaltung bei dem defekten elektronischen Schaltelement von der Ausgangsspannung bei dem nicht defekten Schaltelement deutlich unterscheidet, kann die Steuerelektronik diese Ausgangsspannung auswerten und gegebenenfalls direkt auf einen Kurzschluss des elektronischen Schaltelements zurückschließen.

In der Regel wird ein Triac-Kurzschluss erst dann auftreten, wenn der Elektromotor an dem Versorgungsnetz angeschlossen ist. Für diesen Fall wird gemäß dem Stand der Technik der oben genannte Tachometer zur Überwachung der Motordrehzahl eingesetzt. Weil eine Erkennung von Triac-Kurzschluss auf diese Art eben relativ lange dauert (mehrere 100 ms), kann in dieser Zeit beim Anschließen des Elektromotors an das Versorgungsnetz im Falle eines defekten Triacs der Elektromotor schnell hochdrehen, was beispielsweise zum Springen einer Waschmaschine führen kann. Dadurch können Personen gefährdet oder andere Einrichtungsgegenstände beschädigt werden. Zudem könnte auch heiße Waschmittellauge aus der Einspülschale der Waschmaschine herausgepresst werden.

Deshalb besteht die Aufgabe der vorliegenden Erfindung darin, eine Einrichtung sowie ein Verfahren zum Betreiben eines elektrischen Verbrauchers (wie beispielsweise eines Trommelmotors einer Waschmaschine) mithilfe eines elektrischen Steuerelements (Triac) bereitzustellen, mit denen schon nach möglichst kurzer Zeit nach dem Anschließen des elektrischen Verbrauchers an das Versorgungsnetz eine Erkennung eines Kurzschlusses des elektrischen Steuerelements erfolgt.

Diese Aufgabe wird erfindungsgemäß durch eine Einrichtung der eingangs genannten Gattung gelöst, mit einer Schaltanordnung, die an einem nicht mit einem Netzanschluss verbundenen Abgriff-Pol zwischen der zweiten Anschlusselektrode und dem elektrischen Verbraucher ein elektrisches Potential abgreift und das Potential so wandelt, dass an einer Ausgangsspannung der Schaltanordnung erkennbar ist, ob das elektrische Steuerelement die beiden Anschlusselektroden kurzschließt oder nicht.

Weiterhin wird die Aufgabe durch ein Verfahren zum Betreiben eines elektrischen Verbrauchers mithilfe eines elektrischen Steuerelements gelöst, dem über eine Steuerelektrode Signale zuführbar sind, die den Stromfluss zwischen einer mit einem Netzanschluss gekoppelten ersten Anschlusselektrode und einer mit dem elektrischen Verbraucher gekoppelten zweiten Anschlusselektrode beeinflussen. Dabei wird zunächst der elektrische Verbraucher an einen zweiten Netzanschluss angeschlossen und dann ein elektrisches Potential an einem nicht mit einem Netzanschluss verbundenen Abgriff-Pol zwischen der zweiten Anschlusselektrode und dem elektrischen Verbraucher abgegriffen und zu einem Ausgangspotential gewandelt. Anhand des Ausgangspotentials wird dann erfindungsgemäß überprüft, ob zwischen der ersten und der zweiten Anschlusselektrode ein Kurzschluss auftritt oder nicht. Nur, wenn kein Kurzschluss erkannt wurde, werden schließlich Signale an die Steuerelektrode des elektrischen Steuerelements gesandt.

Der der Erfindung zugrunde liegende Gedanke besteht darin, ein erst nach Anschließen des elektrischen Verbrauchers an das Versorgungsnetz zwischen dem elektrischen Verbraucher und dem elektrischen Steuerelement auftretendes elektrisches Potential mithilfe der Schaltanordnung zu wandeln und anhand der Ausgangsspannung zu erkennen, ob das elektrische Steuerelement einen Kurzschluss aufweist oder nicht. Dies erreicht man dadurch, dass der Abgriff-Pol zwischen der zweiten Anschlusselektrode und dem elektrischen Verbraucher nur dann mit einem Netzanschluss gekoppelt ist, wenn der elektrische Verbraucher an das Versorgungsnetz angeschlossen ist.

Besonders vorteilhaft ist dabei, dass schon nach relativ kurzer Zeit nach dem Anschließen des elektrischen Verbrauchers, beispielsweise eines Antriebsmotors einer Trommel, kurz Trommelmotor genannt, bei einem Wäschebehandlungsgerät, insbesondere einer Waschmaschine, ein möglicher Kurzschluss des elektrischen Steuerelements, beispielsweise ein Triac-Kurzschluss, anhand der Ausgangsspannung der Schaltanordnung erkennbar ist.

Erfindungsgemäß lässt sich ein Kurzschluss des elektrischen Steuerelements schon nach mehreren 10 ms erkennen. Ferner ist vorteilhaft, dass ein mehrmaliger Ansteuerversuch des elektrischen Verbrauchers, wie nach dem Stand der Technik, nicht durchgeführt werden muss. So kann ein Trommelmotor einer Waschmaschine nicht unkontrolliert hochdrehen, wodurch eine Gefahr für Personen und eine Beschädigung von Einrichtungsgegenständen vermieden werden.

Bevorzugt kann die Schaltanordnung das an dem Abgriff-Pol abgegriffene Potential mittels passiver und/oder aktiver Bauelemente wandeln. Die Schaltanordnung kann in einer bevorzugten Ausführungsform der Erfindung einen ersten Spannungsteiler umfassen, mittels welchem das an dem Abgriff-Pol abgegriffene Potential zu einem zweiten Potential heruntersetzbar ist, wobei das zweite Potential an einem ersten Spannungsteiler-Pol abgreifbar ist.

Der erste Spannungsteiler umfasst bevorzugt einen ersten Widerstand, der den Abgriff-Pol mit dem ersten Spannungsteiler-Pol koppelt, und einen zweiten Widerstand, der den ersten Spannungsteiler-Pol mit einem Bezugspotential koppelt.

Bevorzugt umfasst die Schaltanordnung eine erste Diode, die den ersten Spannungsteiler-Pol mit dem Bezugspotential parallel zu dem zweiten Widerstand des ersten Spannungsteilers koppelt, und mittels welcher das an dem ersten Spannungsteiler-Pol abgreifbare zweite Potential begrenzbar ist.

Die Schaltanordnung umfasst in einer weiteren vorteilhaften Ausgestaltung eine zweite Diode, die den ersten Spannungsteiler-Pol mit einem zweiten Spannungsteiler-Pol koppelt, und mittels welcher das zweite Potential von dem ersten Spannungsteiler-Pol zu dem zweiten Spannungsteiler-Pol sperrbar ist.

In der Schaltanordnung ist bevorzugt ein zweiter Spannungsteiler vorgesehen, der einen ersten Parallelwiderstand umfasst, der eine Bezugsspannungsquelle mit dem zweiten Spannungsteiler-Pol koppelt, und einen parallel zu dem ersten Parallelwiderstand geschalteten zweiten Parallelwiderstand umfasst, der den zweiten Spannungsteiler-Pol mit dem Bezugspotential koppelt. So kann - im Falle eines Sperrens des zweiten Potentials von dem ersten Spannungsteiler-Pol zu dem zweiten Spannungsteiler-Pol mittels der zweiten Diode - ein von der Bezugsspannungsquelle mittels des zweiten Spannungsteilers herunter gesetztes drittes Potential an dem zweiten Spannungsteiler-Pol abgegriffen werden.

Durch die obigen Ausgestaltungen der Schaltanordnung wird gewährleistet, dass keine hohen Ausgangspannungen an der Schaltanordnung auftreten können, die ausgewertet werden müssen. Dies vereinfacht den weiteren Aufbau möglicher Auswertesysteme, die nur für niedrige Spannungswerte ausgelegt werden müssen. Insbesondere ermöglicht der erste Spannungsteiler durch vernünftige Auswahl der Widerstandswerte des ersten und des zweiten Widerstands ein geschicktes Heruntersetzen des an dem Abgriff-Pol abgegriffenen Netzpotentials.

In vorteilhafter Weise ist die Schaltanordnung mit einem Mikrokontroller gekoppelt, der die Ausgangsspannung der Schaltanordnung analisiert, um zu erkennen, ob der elektrische Steuerelement die beiden Anschlusselektroden kurzschließt oder nicht, wobei mittels des Mikrokontrollers dem elektrischen Steuerelement Signale zuführbar sind, die den Stromfluss zwischen der ersten Anschlusselektrode und der zweiten Anschlusselektrode beeinflussen. Besonders vorteilhaft ist dabei der Umstand anzusehen, dass die Ausgangsspannung der Schaltanordnung durch den Mikrokontroller sehr schnell analysiert werden kann. Darüber hinaus kann der elektrische Verbraucher direkt nach einem Erkennen eines Kurzschlusses des elektrischen Steuerelements von dem Versorgungsnetz entkoppelt werden, so dass ein unkontrolliertes Verhalten des elektrischen Verbrauchers vermieden wird.

Die erfindungsgemäße Einrichtung umfasst bevorzugt einen ersten Schalter, der zwischen dem nicht mit einem Netzanschluss verbundenen Pol und dem elektrischen Verbraucher gekoppelt ist, und mittels welchem eine elektrische Verbindung zwischen dem elektrischen Verbraucher und dem elektrischen Steuerelement trennbar ist. Durch den Schalter kann der elektrische Verbraucher an das Versorgungsnetz angeschlossen werden, so dass an dem Abgriff-Pol ein Potential abgreifbar ist.

Die mit Bezug auf die erfindungsgemäße Einrichtung vorgestellten bevorzugten Ausführungsformen und deren Vorteile gelten entsprechend, sofern anwendbar, für das erfindungsgemäße Verfahren.

Nach dem erfindungsgemäßen Verfahren wird bevorzugt das zu wandelnde elektrische Potential zunächst zu einem zweiten elektrischen Potential heruntergesetzt. Im Falle, dass das zweite elektrische Potential unter einem vorbestimmten negativen Wert liegt, wird das zweite elektrische Potential bis zu einem vorbestimmten negativen Potential nach unten hin begrenzt. Dann kann das vorbestimmte negative Potential zu einem vorbestimmten Ausgangspotential kompensiert und ausgegeben werden.

In einer anderen vorteilhaften Ausführungsform des erfindungsgemäßen Verfahrens wird das zu wandelnde elektrische Potential zu einem zweiten elektrischen Potential heruntergesetzt. Im Falle, dass das zweite elektrische Potential über einem vorbestimmten Wert liegt, wird das zweite elektrische Potential von einem Ausgangs-Pol entkoppelt. Stattdessen kann ein elektrisches Bezugspotential zu einem Ausgangspotential abgegriffen, heruntergesetzt und an dem Ausgangs-Pol ausgegeben werden.

Weitere Vorteile, Merkmale und Einzelheiten der Erfindung ergeben sich aus der nachfolgenden Beschreibung einzelner bevorzugten Ausführungsbeispiele sowie anhand der Zeichnung. Dabei zeigt:
- Fig. 1: in schematischer Darstellung eine erfindungsgemäße Einrichtung gemäß einem ersten Ausführungsbeispiel;
- Fig. 2: beispielhafte zeitliche Signalverläufe;
- Fig. 3: in schematischer Darstellung die erfindungsgemäße Einrichtung gemäß einem zweiten Ausführungsbeispiel;
- Fig. 4: in schematischer Darstellung die erfindungsgemäße Einrichtung gemäß einem dritten Ausführungsbeispiel;
- Fig. 5: in schematischer Darstellung die erfindungsgemäße Einrichtung gemäß einem vierten Ausführungsbeispiel;
- Fig. 6: in schematischer Darstellung die erfindungsgemäße Einrichtung gemäß einem fünften Ausführungsbeispiel;
- Fig. 7: in schematischer Darstellung die erfindungsgemäße Einrichtung gemäß einem sechsten Ausführungsbeispiel.

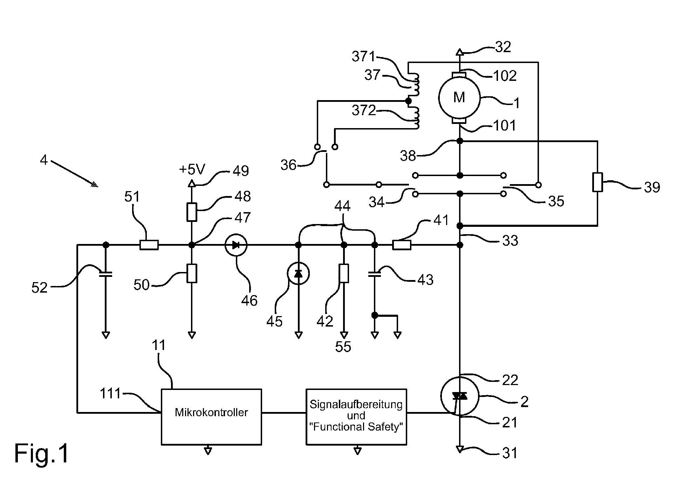

Gemäß Fig. 1 wird ein Elektromotor 1 zur Bewegung einer Waschtrommel in einer Waschmaschine durch Steuersignale eines Mikrokontrollers 11, die einem Triac 2 zugeführt werden, gesteuert. Dadurch kann die Drehzahl des Elektromotors 1 geregelt werden. Der Triac 2 umfasst eine erste Anschlusselektrode 21, die mit einem ersten Netzanschluss 31, insbesondere einem Bezugspotential, gekoppelt ist, und eine zweite Anschlusselektrode 22, die an einem Abgriff-Pol 33 liegt. Mit dem Abgriff-Pol 33 ist ferner ein Anschluss 101 des Elektromotors 1 über zwei Wenderelais 34 und 35 gekoppelt, wobei ein zweiter Anschluss 102 des Elektromotors 1 mit einem zweiten Netzanschluss 32 verbunden ist. Über die Wenderelais 34 und 35 kann die Drehrichtung des Elektromotors 1 eingestellt werden, indem einer Motor-Feldwicklung 37 Strom aus jeweils unterschiedlicher Richtung zugeführt wird. Bei hohen Drehzahlen des Elektromotors 1, beispielsweise ab 1400 Umdrehungen pro Minute, wird ein Relais 36 so eingeschaltet, dass ein erster Teil 372 der Motor-Feldwicklung 37 überbrückt, und der Strom nur einem zweiten Teil 371 der Motor-Feldwicklung zugeführt wird. Hingegen werden bei niedrigen Drehzahlen des Elektromotors 1 durch ein entsprechendes Umschalten des Relais 36 beide Teile 371 und 372 der Motor-Feldwicklung 37 verwendet.

Zwischen dem Abgriff-Pol 33 und einem zwischen dem Anschluss 101 des Elektromotors 1 und den beiden Wenderelais 34 und 35 liegenden Motoranschluss-Pol 38 ist ein Parallelwiderstand 39 geschaltet, der ein Netzspannungspotential hochohmig an der ersten Anschlusselektrode 22 des Triacks 2 nachführt. Dieser Parallelwiderstand 39 weist lediglich eine Funktion des Schutzes des Triacs 2 gegen Überkopfzünden bei zu hohen Spannungsspitzen beim Schalten der Wenderelais 34 und 35 auf und beträgt beispielsweise 390 kΩ, 470 kΩ oder 510 kΩ. Es sind aber auch andere Werte für den Parallelwiderstand 39 möglich.

Erst, wenn die Wenderelais 34 und 35 eingeschaltet sind, ist der Stromkreis von dem Netzanschluss 32 über den Elektromotor 1 und die Wenderelais 34 und 35 bis hin zu der Anschlusselektrode 22 des Triacs 2 geschlossen. Die Verbindung zu dem Netzanschluss 31 wird durch den Triac 2 gesteuert. Auf diese Art und Weise kann der Stromfluss zwischen der Anschlusselektrode 22 und der Anschlusselektrode 21 des Triacs 2 und somit die Drehzahl des Elektromotors 1 geregelt werden. In einem normalen Betriebszustand ist der Triac 2 nichtleitend, d.h. die Anschlusselektroden 21 und 22 des Triacs 2 sind elektrisch entkoppelt.

Gemäß Fig. 1 wird der Abgriff-Pol 33 mit dem Mikrokontroller 11 mittels einer Schaltanordnung 4 gekoppelt, mit deren Hilfe der Mikrokontroller 11 (nämlich anhand deren Ausgangsspannung) feststellen kann, ob der Triac 2 die Anschlusselektroden 21 und 22 kurzschließt oder nicht. Und zwar kann mithilfe dieser Schaltanordnung 4 eine Prüfung auf Triac-Kurzschluss, auf Triac-Halbwellenkurzschluss, sowie auf fehlerhaftes Durchschalten des Triacs 2 durchgeführt werden. Die Funktionsweise der Schaltanordnung 4 wird im Folgenden näher beschrieben.

Zunächst sei angenommen, dass der Triac 2 funktionsfähig, allerdings von dem Mikrokontroller 11 nicht angesteuert ist, und dass der Stromkreis zwischen dem Netzanschluss 32 und der Anschlusselektrode 22 des Triacs 2 geschlossen ist, d.h. die Wenderelais 34 und 35 in einem der möglichen Zustände eingeschaltet sind. Somit liegt an dem Abgriff-Pol 33 über den Elektromotor 1 und die Wenderelais 34 und 35 eine Spannung mit einem Effektivwert Veff von 230 Volt an. Diese Spannung kann an dem Abgriff-Pol 33 gemäß Fig. 1 nur dann auftreten, wenn der Abgriff-Pol 33 über die Wenderelais 34 und 35 mit dem Netzanschluss 32 gekoppelt ist. Ansonsten, also wenn die Wenderelais 34 und 35 offen bleiben, ist der Abgriff-Pol 33 von dem Netzanschluss 32 vollständig entkoppelt.

Die an dem Abgriff-Pol 33 nach Schließen der Wenderelais 34 und 35 liegende Spannung (230 Veff) wird mithilfe eines ein Bestandteil der Schaltanordnung 4 bildenden Spannungsteilers heruntergesetzt. Der Spannungsteiler umfasst dabei einen ersten Widerstand 41, der den Abgriff-Pol 33 mit einem Spannungsteiler-Pol 44 koppelt, und einen zweiten Widerstand 42, der den Spannungsteiler-Pol 44 mit einem Bezugspotential 55 koppelt. Geht man davon aus, dass der erste Widerstand 41 einen Widerstandswert von 220 kΩ und der zweite Widerstand 42 einen Widerstandswert von 10 kΩ aufweist, so beträgt die an dem Spannungsteiler-Pol 44 für eine positive Netzhalbwelle auftretende Spitzenspannung ca. 14 Volt.

Die Schaltanordnung 4 umfasst ferner eine parallel zu dem Widerstand 42 an dem Spannungsteiler-Pol 44 geschaltete Diode 45, die die Aufgabe hat, eine an dem Spannungsteiler-Pol 44 auftretende negative Spannung auf -0,7 V nach unten hin gegenüber Masse 55 (GND) zu begrenzen. Diese Diode 45 kann insbesondere eine Zenerdiode sein.

Weiterhin weist die Schaltanordnung 4 eine zweite Diode 46 auf, die den Spannungsteiler-Pol 44 mit einem weiteren Spannungsteiler-Pol 47 koppelt. Diese zweite Diode 46 hat die Aufgabe, eine an dem Spannungsteiler-Pol 44 auftretende Spannung zu sperren, wenn die Spannung einen vorbestimmten Spannungswert von 5 V überschreitet. Mit anderen Worten wird mittels der zweiten Diode 46 der weitere Spannungsteiler-Pol 47 von dem Spannungsteiler-Pol 44 entkoppelt, wenn die an dem Spannungsteiler-Pol 44 auftretende Spannung mehr als 5 V beträgt. Diese zweite Diode 46 kann insbesondere eine Zenerdiode sein.

An dem weiteren Spannungsteiler-Pol 47 sind ferner zwei Parallelwiderstände 48 und 50 vorgesehen, die zwischen einer Bezugsspannungsquelle 49 und Masse 55 (GND) zueinander in Reihe geschaltet sind und die parallel zu dem Triac 2 liegen, sobald dieser Triac 2 kurzgeschlossen ist. Der Parallelwiderstand 48 mit einem Widerstandswert von 10 kΩ koppelt den weiteren Spannungsteiler Pol 47 mit der Bezugsspannungsquelle 49, die eine Spannung von +5 V erzeugt. Der zweite Parallelwiderstand 50 koppelt hingegen den weiteren Spannungsteiler-Pol 47 mit dem Bezugspotential 55 und weist einen Widerstandswert von 100 kΩ auf.

Ausgehend von dem Spannungsteiler-Pol 44 und der an dem Spannungsteiler-Pol 44 auftretenden Spitzenspannung Vp von 14 Volt für eine positive Netzhalbwelle, wenn der Stromkreis zwischen dem Netzanschluss 32 und der Anschlusselektrode 22 des Triacs 2 geschlossen ist, wird der Spannungsteiler-Pol 44 von dem weiteren Spannungsteiler-Pol 47 mittels der Diode 46 entkoppelt. Die Diode 46 sperrt also die an dem Spannungsteiler-Pol 44 liegende Spitzenspannung Vp von 14 Volt. An dem weiteren Spannungsteiler-Pol 47 stellt sich dann von der Bezugsspannungsquelle 49 über die Parallelwiderstände 48 und 50 für die Zeit der positiven Netzhalbwelle eine Spannung von ca. 4,5 V ein. Diese Spannung von ca. 4,5 V liegt auch an einem Eingang 111 des Mikrokontrollers 11.

Betrachtet man nun erneut die an dem Abgriff-Pol 33 nach Schließen der Wenderelais 34 und 35 liegende Spannung von 230 V (Effektivwert), so beträgt die an dem Spannungsteiler-Pol 44 für eine negative Netzhalbwelle auftretende Spitzenspannung Vp ca. -14 V. Diese Spannung wird jedoch mittels der Paralleldiode 45 auf -0,7 V begrenzt und mit der zweiten Diode 46 so kompensiert, dass sich an dem weiteren Spannungsteiler-Pol 47 aufgrund einer Flussspannung der zweiten Diode 46 eine Spannung von ca. 0 V ergibt, die auch an dem Eingang 111 des Mikrokontrollers 11 liegt.

Wir gehen nun von dem Fall aus, dass der Triac 2 einen Kurzschluss für die positive Netzhalbwelle aufweist und von dem Mikrokontroller 11 nicht angesteuert ist, und dass der Stromkreis zwischen dem Netzanschluss 32 und der Anschlusselektrode 22 des Triacs 2 geschlossen ist (die Wenderelais 34 und 35 sind geschlossen). Dann ergibt sich an dem Abgriff-Pol 33 für die positive Netzhalbwelle eine Flussspannung mit einem Spitzenwert Vp von ca. 1,3 V beziehungsweise im Kurzschlussfall eine Spannung von 0 V. Über die Widerstände 41 und 42 stellt sich dann an dem Spannungsteiler-Pol 44 eine Spannung von ca. 0,056 V ein. Aufgrund der positiven Spannung von ca. 0,056 V ist die Paralleldiode 45 nicht leitend. Hingegen ist die zweite Diode 46 leitend, so dass nun der Parallelwiderstand 50 parallel zu dem Widerstand 42 geschaltet ist. Diese Parallelschaltung der Widerstände 42 und 50 ergibt einen Widerstandswert von ca. 10 kΩ. Somit stellt sich an dem weiteren Spannungsteiler-Pol 47 (somit auch am Eingang 111 des Mikrokontrollers 11) von der Bezugsspannungsquelle 49 eine Spannung von ca. 2,5 V ein. Ein Pegel der Eingansspannung von 2,5 V während der positiven Netzhalbwelle bedeutet, dass der Triac 2 für die positive Netzhalbwelle leitend (beschädigt) ist, was durch den Mikrokontroller 11 ausgewertet wird. Sobald ein Kurzschluss des Triacs 2 erkannt wird, werden die Wenderelais 34 und 35 geöffnet, so dass der Elektromotor 1 von dem Versorgungsnetz entkoppelt wird.

Wenn der Triac 2 einen Kurzschluss für die negative Netzhalbwelle aufgrund einer Beschädigung aufweist (der Triac 2 ist nicht angesteuert und die Wenderelais 34 und 35 sind geschlossen), ergibt sich an dem Abgriff-Pol 33 für die negative Netzhalbwelle eine Flussspannung von ca. -1,3 V beziehungsweise in Kurzschlussfall eine Spannung von 0 V. Über die Widerstände 41 und 42 stellt sich dann an dem Spannungsteiler-Pol 44 eine Spannung von ca. -0,056 V ein. Aufgrund der zu geringen negativen Spannung von ca. - 0,056 V ist die Paralleldiode 45 nicht leitend. Hingegen ist die zweite Diode 46 leitend, so dass wiederum der Parallelwiderstand 50 parallel zu dem Widerstand 42 geschaltet ist. Diese Parallelschaltung der Widerstände 42 und 50 ergibt hier auch einen Widerstandswert von ca. 10 kΩ. Somit stellt sich an dem weiteren Spannungsteiler-Pol 47 (somit auch am Eingang 111 des Mikrokontrollers 11) von der Bezugsspannungsquelle 49 eine Spannung von ca. 2,5 V ein. Ein Pegel der Eingansspannung von 2,5 V während der negativen Netzhalbwelle deutet daher auf einen Kurzschluss des Triacs 2 für die negative Netzhalbwelle hin. Sobald ein Kurzschluss des Triacs 2 erkannt wird, werden die Wenderelais 34 und 35 geöffnet, so dass der Elektromotor 1 von dem Versorgungsnetz entkoppelt wird.

Wird von einem vollständigen Kurzschluss des Triacs 2 sowohl für die positive als auch für die negative Netzhalbwelle ausgegangen, so fällt an den Abgriff-Pol 33 keine elektrische Spannung ab. Somit ergibt sich an dem weiteren Spannungsteiler-Pol 47 von der Bezugsspannungsquelle 49 über den Parallelwiderstand 48 und die zwei nun parallel geschalteten Widerstände 42 und 50 eine Spannung von 2,5 V (für positive und negative Netzhalbwelle). Diese Spannung wird auch am Eingang 111 von dem Mikrokontroller 11 abgegriffen. Da bei einem kurzgeschlossenen Triac 2 bei der positiven und negativen Netzhalbwelle eine Dauerspannung von ca. 2,5 V anliegt, ist bei der Programmierung des Mikrokontrollers 11 davon ausgegangen, dass der Triac 2 in beiden Richtungen leitend (beschädigt) ist. Bei einem kurzgeschlossenen Triac 2 fließt zwischen der ersten Anschlusselektrode 21 und der zweiten Anschlusselektrode 22 ein Triacstrom. Sobald ein Kurzschluss des Triacs 2 von dem Mikrokontroller 11 erkannt wird, wird der Elektromotor 1 durch Öffnen der Wenderelais 34 und 35 von dem Versorgungsnetz entkoppelt.

Zusätzlich umfasst die Schaltanordnung einen Filterkondensator 43 der zusammen mit dem Widerstand 41 als Tiefpassfilter wirkt. Der Filterkondensator 43 mit einer Kapazität von 10 nF koppelt den Spannungsteiler-Pol 44 mit dem Bezugspotential 55 und filtert somit an dem Spannungsteiler-Pol 44 auftretende Signale mit ungewollten Frequenzen. An dem weiteren Spannungsteiler-Pol 47 ist weiterhin ein RC-Filter vorgesehen, umfassend einen RC-Filterwiderstand 51 (4,7 kΩ) und einen RC-Filterkondensator 52 (10 nF), die an dem weiteren Spannungsteiler-Pol 47 miteinander gekoppelt sind. Dabei koppelt der RC-Filterwiderstand 51 den weiteren Spannungsteiler-Pol 47 mit dem Eingang 111 des Mikrokontrollers 11 und begrenzt somit den Stromfluss zu dem Mikrokontroller 11. Der RC-Filterkondensator 52 koppelt hingegen den Eingang 111 des Mikrokontrollers 11 mit dem Bezugspotential 55 und filtert somit an dem Eingang 111 auftretende Signale mit ungewollten Frequenzen.

Alternativ kann auch der Widerstand 42 aus der Schaltanordnung 4 weggelassen werden, wenn die Sperrspannung der Paralleldiode 45 und der Diode 46 größer als die Netzspannung ist. Dann muss jedoch die Spannungsfestigkeit des Filterkondensators 43 größer als die Netzspannung sein.

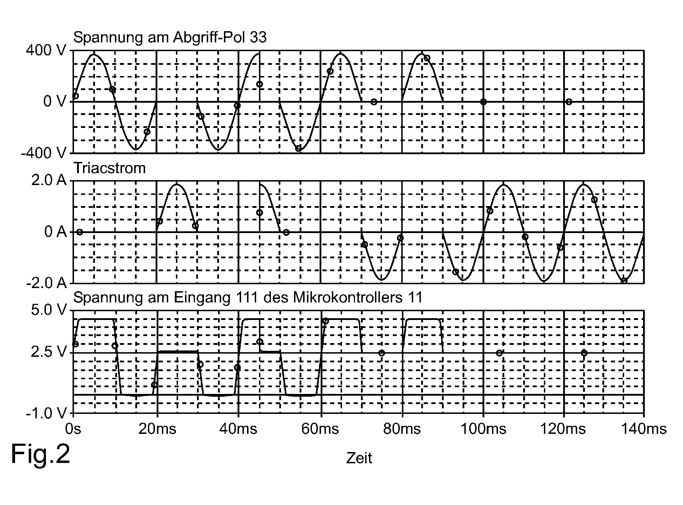

Fig. 2 stellt beispielhaft zeitliche Verläufe der Spannung an dem Abgriff-Pol 33, des Triacstroms, sowie der an dem Eingang 111 des Mikrokontrollers 11 auftretenden Spannung dar. In einem ersten Zeitintervall von 0 ms bis hin zu 20 ms, also während einer ganzen Netzspannungsperiode, ist der Triac 2 nicht beschädigt, und die zwei Anschlusselektroden 21 und 22 sind entkoppelt. Über den Elektromotor 1 und die Wenderelais 34 und 35 liegt an dem Abgriff-Pol 33 die Netzspannung an. Zu erkennen ist, dass in dem ersten Zeitintervall kein Strom zwischen den beiden Anschlusselektroden 21 und 22 des Triacs 2 fließt. Weiterhin beträgt die an dem Eingang 111 des Mikrokontrollers 11 liegende Spannung für die positive Netzhalbwelle ca. 4,5 V und für die negative Netzhalbwelle ca. 0 V.

In einem zweiten Zeitintervall von 20 ms bis 40 ms gemäß Fig. 2 ist der Triac 2 für die positive Netzhalbwelle durchlässig. Somit beträgt die an dem Abgriff-Pol 33 liegende Spannung 0 V und das Maximum des Triacstroms ca. 2 A. Für dieses zweite Zeitintervall liegt an dem Eingang 111 des Mikrokontrollers 11 eine Spannung von ca. 2,5 V an.

Anhand der in Fig. 2 dargestellten Signalverläufe kann auch eine Prüfung auf fehlerhaftes Durchschalten des Triacs 2 durchgefürt werden. Beispielsweise ist der Triac 2 in einem dritten Zeitintervall von 40 bis 60 ms gemäß Fig. 2 ab einen Netzmaximum leitend (also in einem Zeitintervall von 45 bis 50 ms). Dies kann sowohl aus dem Triacstromverlauf (Triacstrom fließt), als auch anhand des Abgriff-Pol-Spannungsverlaufs (0 V) und der Mikrokontroller-Eingangsspannung (ca. 2,5 V) erkannt werden.

Gemäß Fig. 2 ist der Triac 2 für ein weiteres Zeitintervall von 60 ms bis 100 ms für die negative Netzhalbwelle durchlässig, was aus den Spannungswerten (0 V an dem Abgriff-Pol 33 und ca. 2,5 V am Eingand 111 des Mikrokontrollers 11) für die negative Netzhalbwelle erkennbar ist.

Bei einem vollständig durchlegierten Triac 2 liegt an dem Eingang 111 des Mikrokontrollers 11 eine Dauerspannung von ca. 2,5 V an. Diese Spannung ist in Fig. 2 in einem weiteren Zeitintervall von 100 bis 140 ms zu erkennen. Ferner ist in Fig. 2 erkennbar, dass während dieses ganzen Zeitintervalls kein Potential an dem Abgriff-Pol 33 anliegt und stattdessen der Triacstrom zwischen den beiden Anschlusselektroden 21 und 22 des Triacs 2 fließt.

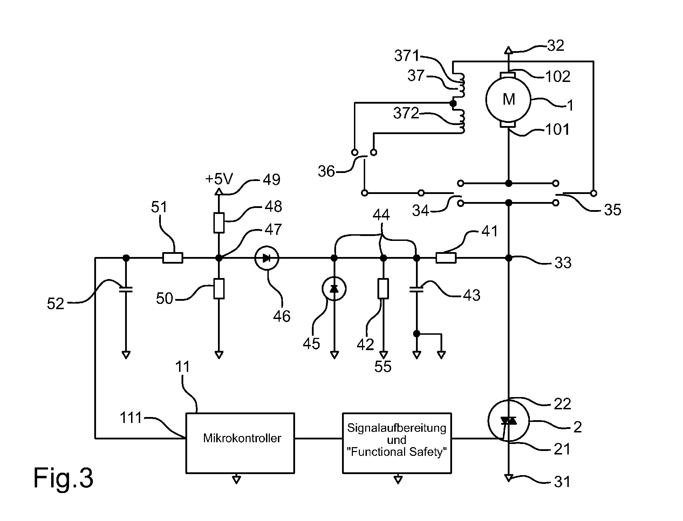

Optional könnte auch eine Überprüfung des Triacs 2 bei noch nicht eingeschalteten Wenderelais 34 und 35 erfolgen. Dazu wäre es aber notwendig, dass der Parallelwiderstand 39 und die Schaltanordnung 4, die auch als Triac-Kurzschlusserkennungsschaltung bezeichnet wird, entsprechend dimensioniert sind. Gemäß einem weiteren Ausführungsbeispiel kann der Parallelwiderstand 39, wie in Fig. 3 dargestellt, weggelassen werden.

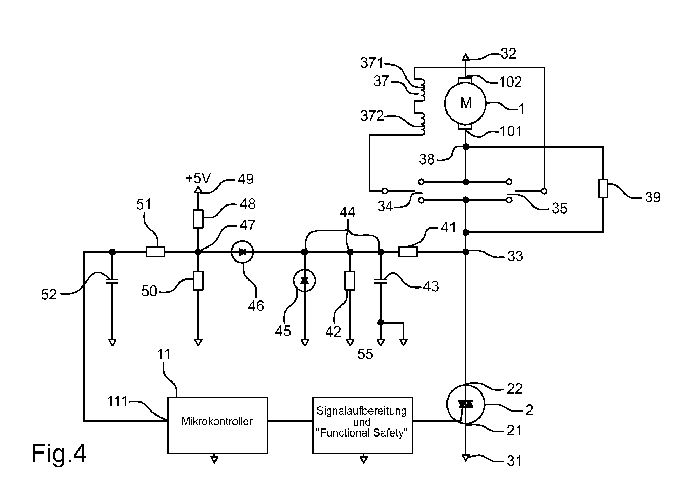

Gemäß einem dritten Ausführungsbeispiel kann das Relais 36 weggelassen werden, wie in Fig. 4 dargestellt. Durch diese Vereinfachung kann allerdings eine niedrigere Enddrehzahl des Elektromotors 1 erreicht werden. In dem Fall wird das Wenderelais 34 direkt mit der Motor-Feldwicklung 37 verbunden.

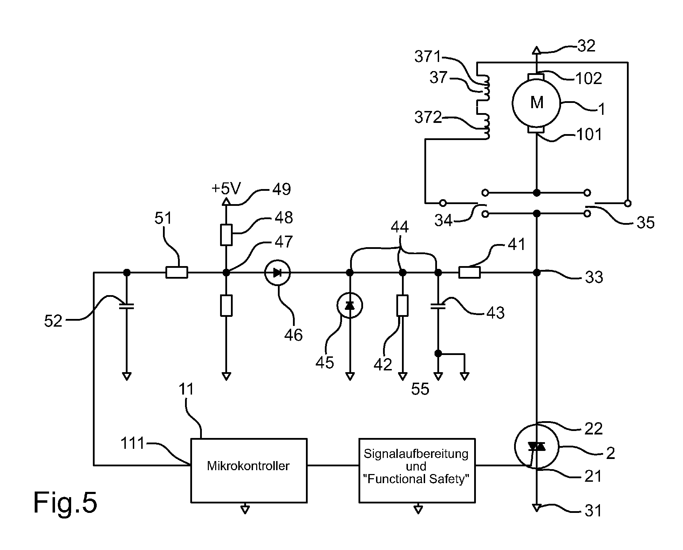

Gemäß Fig. 5 werden sowohl der Parallelwiderstand 39, als auch das Relais 36 weggelassen.

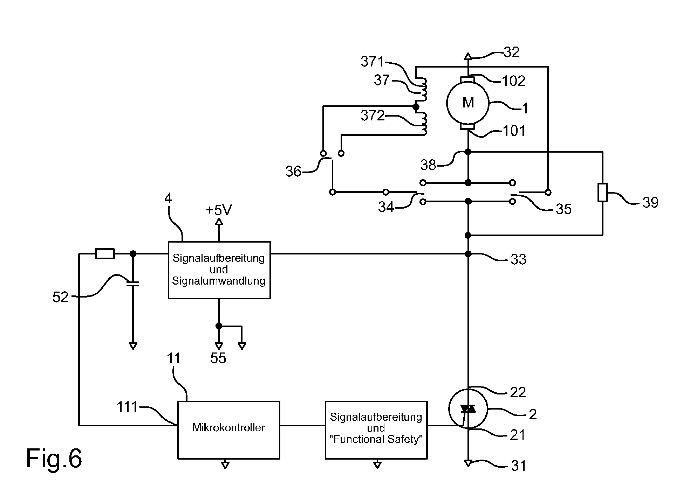

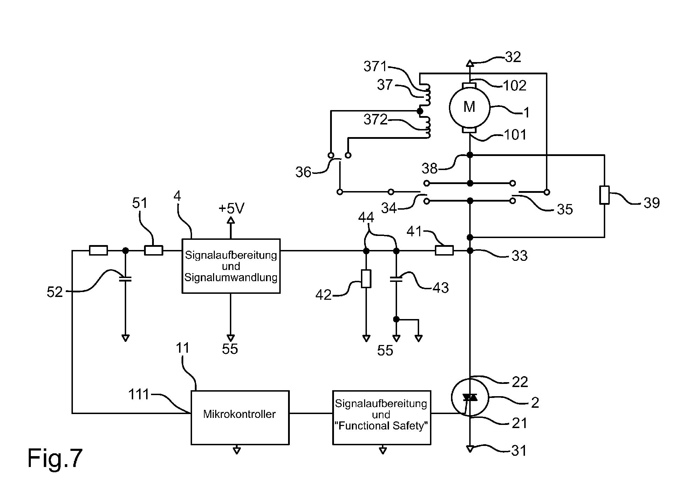

Die Schaltanordnung 4 gemäß Fig. 1 kann auch mittels aktiver Bauelemente, beispielsweise mit einem Operationsverstärker oder mit einem ASIC realisiert werden. Wie in Fig. 6 dargestellt, können die Bauteile der Schaltanordnung 4 in einen Block 4 "Signalaufbereitung und Signalumwandlung" zusammengefasst werden. So kann die Schaltanordnung 4 als "Black-Box" gesehen werden, die die an dem Abgriff-Pol 33 liegende Spannung in eine Ausgangsspannung umwandelt, die an den Eingang 111 des Mikrokontrollers 11 zugeführt wird. Dabei können die Widerstände 41 und 42 und der Filterkondensator 43, sowie der RC-Filterwiderstand 51 und der RC-Filterkondensator 52 von Fig. 1 in den Block 4 "Signalaufbereitung und Signalumwandlung" mit eingebaut werden, wie für Fig. 6 angenommen. In Fig. 7 sind diese Bauteile separat gezeigt.

## Patentansprüche

1. Einrichtung zum Betreiben eines elektrischen Verbrauchers (1) mithilfe eines elektrischen Steuerelements (2), dem über eine Steuerelektrode Signale zuführbar sind, die den Stromfluss zwischen einer mit einem Netzanschluss gekoppelten ersten Anschlusselektrode (21) und einer mit dem elektrischen Verbraucher gekoppelten zweiten Anschlusselektrode (22) beeinflussen, wobei der elektrische Verbraucher (1) mit einem zweiten Netzanschluss gekoppelt ist (32), **gekennzeichnet durch**
- eine Schaltanordnung (4), die an einem nicht mit einem Netzanschluss verbundenen Abgriff-Pol (33) zwischen der zweiten Anschlusselektrode (22) und dem elektrischen Verbraucher (1) ein elektrisches Potential abgreift und das Potential so wandelt, dass an einer Ausgangsspannung der Schaltanordnung (4) erkennbar ist, ob das elektrische Steuerelement (2) die beiden Anschlusselektroden (21 und 22) kurzschließt oder nicht.

2. Einrichtung nach Anspruch 1, wobei die Schaltanordnung das an dem Abgriff-Pol (33) abgegriffene Potential mittels passiver Bauelemente wandelt.

3. Einrichtung nach Anspruch 1 oder 2, wobei die Schaltanordnung das an dem Abgriff-Pol (33) abgegriffene Potential mittels aktiver Bauelemente wandelt.

4. Einrichtung nach einem der Ansprüche 1 bis 2, wobei die Schaltanordnung einen ersten Spannungsteiler umfasst, mittels welchem das an dem Abgriff-Pol (33) abgegriffene Potential zu einem zweiten Potential herunter setzbar ist, wobei das zweite Potential an einem ersten Spannungsteiler-Pol (44) abgreifbar ist.

5. Einrichtung nach Anspruch 4, wobei der erste Spannungsteiler einen ersten Widerstand (41) umfasst, der den Abgriff-Pol mit dem ersten Spannungsteiler-Pol koppelt, und einen zweiten Widerstand (42) umfasst, der den ersten Spannungsteiler-Pol (44) mit einem Bezugspotential (55) koppelt.

6. Einrichtung nach Anspruch 5, wobei die Schaltanordnung eine erste Diode (45) umfasst, die den ersten Spannungsteiler-Pol (44) mit dem Bezugspotential (55) parallel zu dem zweiten Widerstand (42) des ersten Spannungsteilers koppelt, und mittels welcher das an dem ersten Spannungsteiler-Pol (44) abgreifbare zweite Potential begrenzbar ist.

7. Einrichtung nach Anspruch 5 oder 6, wobei die Schaltanordnung weiterhin eine zweite Diode (46) umfasst, die den ersten Spannungsteiler-Pol (44) mit einem zweiten Spannungsteiler-Pol (47) koppelt, und mittels welcher der erste Spannungsteiler-Pol (44) von dem zweiten Spannungsteiler-Pol (47) entkoppelbar ist.

8. Einrichtung nach Anspruch 7, wobei in der Schaltanordnung ein zweiter Spannungsteiler mit einem ersten Parallelwiderstand (48), der eine Bezugsspannungsquelle (49) mit dem zweiten Spannungsteiler-Pol (47) koppelt, und einem zweiten Parallelwiderstand (50), der den zweiten Spannungsteiler-Pol (47) mit dem Bezugspotential (55) koppelt, ein elektrisches Potential der Bezugsspannungsquelle herunter setzt und an dem zweiten Spannungsteiler-Pol (47) ausgibt.

9. Einrichtung nach einem der vorhergehenden Ansprüche, wobei die Schaltanordnung (4) mit einem Mikrokontroller (11) gekoppelt ist, der die Ausgangsspannung der Schaltanordnung (4) analysiert, um zu erkennen, ob das elektrische Steuerelement (2) die beiden Anschlusselektroden (21 und 22) kurzschließt oder nicht.

10. Einrichtung nach Anspruch 9, wobei mittels des Mikrokontrollers (11) dem elektrischen Steuerelement (2) Signale zuführbar sind, die den Stromfluss zwischen der ersten Anschlusselektrode (21) und der zweiten Anschlusselektrode (22) beeinflussen.

11. Einrichtung nach einem der vorhergehenden Ansprüche, weiterhin umfassend einen Schalter (34, 35), der zwischen dem Abgriff-Pol (33) und dem elektrischen Verbraucher (1) gekoppelt ist, und mittels welchem eine elektrische Verbindung zwischen dem elektrischen Verbraucher (1) und dem elektrischen Steuerelement (2) trennbar ist.

12. Einrichtung nach einem der vorhergehenden Ansprüche, wobei der elektrische Verbraucher (1) ein Elektromotor einer Waschmaschine und der elektrische Steuerelement (2) ein Triac ist.

13. Verfahren zum Betreiben eines elektrischen Verbrauchers mithilfe eines elektrischen Steuerelements, dem über eine Steuerelektrode Signale zuführbar sind, die den Stromfluss zwischen einer mit einem Netzanschluss gekoppelten ersten Anschlusselektrode und einer mit dem elektrischen Verbraucher gekoppelten zweiten Anschlusselektrode beeinflussen, **gekennzeichnet durch** folgende Schritte:
a) Anschließen des elektrischen Verbrauchers an einen zweiten Netzanschluss;
b) Abgreifen eines elektrischen Potentials an einem nicht mit einem Netzanschluss verbundenen Abgriff-Pol zwischen der zweiten Anschlusselektrode und dem elektrischen Verbraucher, wobei das elektrische Potential zu einem Ausgangspotential gewandelt wird;
c) Überprüfen anhand des Ausgangspotentials, ob zwischen der ersten und der zweiten Anschlusselektrode ein Kurzschluss auftritt oder nicht.
d) Senden von Signalen an die Steuerelektrode des elektrischen Steuerelements nur, wenn kein Kurzschluss erkannt wurde.

14. Verfahren nach Anspruch 13, wobei das Wandeln des elektrischen Potentials umfasst:
- Heruntersetzen des an dem Abgriff-Pol abgegriffenen elektrischen Potentials zu einem zweiten elektrischen Potential;
- Begrenzen des zweiten elektrischen Potentials bis zu einem vorbestimmten negativen Potential nach unten hin im Falle, dass das zweite elektrische Potential unter einem vorbestimmten negativen Wert liegt;
- Kompensieren des vorbestimmten negativen Potentials zu einem vorbestimmten Ausgangspotential;
- Ausgeben des Ausgangspotentials.

15. Verfahren nach Anspruch 13, wobei das Wandeln des elektrischen Potentials umfasst:
- Heruntersetzen des an dem Abgriff-Pol abgegriffenen elektrischen Potentials zu einem zweiten elektrischen Potential;
- Entkoppeln des zweiten elektrischen Potentials von einem Ausgangs-Pol im Falle, dass das zweite elektrische Potential über einem vorbestimmten Wert liegt; und stattdessen
- Abgreifen und Heruntersetzen eines elektrischen Bezugspotential zu einem Ausgangspotential;
- Ausgeben des Ausgangspotentials an dem Ausgangs-Pol.
